# EUROPÄISCHE PATENTSCHRIFT

(11) **EP 2 483 670 B1**
(45) Veröffentlichungstag und Bekanntmachung des Hinweises auf die Patenterteilung: **14.08.2013**
(21) Anmeldenummer: 10754436.3
(22) Anmeldetag: 16.09.2010
(51) Int. Cl.: G01N 21/84

(54) **VERFAHREN ZUM STEUERN EINER PHOTOMETRISCHEN MESSEINHEIT EINES MESSGERÄTS ZUR GEWINNUNG UND UNTERSUCHUNG EINER KÖRPERFLÜSSIGKEITSPROBE SOWIE MESSSYSTEM**
Method for controlling a photometric measuring unit of a measuring device for generating and examining a body liquid sample and measuring system
Procédé de commande d'une unité de mesure photométrique d'un appareil de mesure pour la production et l'examen d'un échantillon de liquide corporel et système de mesure

(30) Priorität: 30.09.2009 EP 09012364
(43) Veröffentlichungstag der Anmeldung: 08.08.2012
(73) Patentinhaber: Roche Diagnostics GmbH, 68305 Mannheim (DE); F.Hoffmann-La Roche AG, 4070 Basel (CH)
(72) Erfinder: WEHOWSKI, Frederich, 68766 Hockenheim (DE); HARTTIG, Herbert, 68434 Neustadt (DE); HÖNES, Joachim, 64673 Zwingenberg (DE)
(74) Vertreter: Mommer, Niels
(86) Internationale Anmeldenummer: PCT/EP2010/005679
(87) Internationale Veröffentlichungsnummer: WO 2011/038839

(56) Entgegenhaltungen:
- EP-A- 0 819 943
- EP-A- 1 359 409
- EP-A- 1 775 577
- EP-A- 1 843 148
- EP-A- 1 936 362
- EP-A- 2 034 293
- US-A1- 2006 018 792
- US-A1- 2009 155 921

## Beschreibung

Die Erfindung betrifft ein Verfahren zum Steuern einer photometrischen Messeinheit eines Messgeräts zur Untersuchung einer durch einen Stich gewonnenen menschlichen oder tierischen Körperflüssigkeitsprobe. Die Erfindung betrifft ferner ein Messsystem mit einem Messgerät und Testfeldern mit Nachweisreagenzien, die bei Kontakt mit Körperflüssigkeit eine Nachweisreaktion bewirken. Photometrisch auswertbare Nachweisreaktionen bewirken in der Regel eine Farbänderung, deren Stärke von der Analytkonzentration abhängt. Ein Verfahren mit den im Oberbegriff des Anspruchs 1 angegebenen Merkmalen sowie ein entsprechendes Messsystem sind aus der EP 1 843 148 bekannt.

Derartige Messsysteme ermöglichen eine einfache Bestimmung einer Analytkonzentration in einer Körperflüssigkeitsprobe, in der Regel Blut und/oder interstitielle Flüssigkeit. Wichtige Analytkonzentrationen, die mit solchen Messsystemen bestimmt werden können, sind beispielsweise die Glucosekonzentration, die Cholesterinkonzentration oder die Lactatkonzentration.

Ein Vorteil eines Mess- und Stechgeräts ist, dass eine durch einen Stich gewonnene Körperflüssigkeitsprobe ohne weiteres Zutun eines Benutzers einem Testfeld zugeführt werden kann. Beispielsweise können Stechelemente mit einem Kanal verwendet werden, der durch Kapillarkräfte Körperflüssigkeit aufnimmt. Ein solcher Kanal kann zu einem auf dem Stechelement angeordneten Testfeld führen oder für eine Probenübergabe an ein separates Testfeld genutzt werden, beispielsweise indem ein Testfeld gegen einen als Rinne ausgeführten Abschnitt des Kanals gedrückt wird. Eine weitere Möglichkeit für eine selbsttätige Probenaufnahme ist beispielsweise aus der WO 2008/083844 A1 bekannt und besteht darin, ein Testfeld mit einer geeigneten Gerätemechanik an eine Stichwunde anzulegen.

Die Bedienung eines Mess- und Stechgeräts ist wegen der selbsttätigen Probenaufnahme relativ einfach und es besteht kaum eine Gefahr, dass eine Körperflüssigkeitsprobe auf dem Weg zum Testfeld verschmutzt wird. Zudem kann bereits mit sehr kleinen Probenmengen, die für eine vollständige Benetzung eines Testfeldes unzureichend sind, eine Konzentrationsbestimmung durchgeführt werden. Damit die photometrische Konzentrationsbestimmung nicht durch Licht von unbenetzten Testfeldbereichen verfälscht wird, ist es aus der US 6249593 bekannt, das Testfeld mit einem Detektorarray in einer sehr großen Anzahl von Pixeln zu erfassen und durch eine Bildauswertung Pixel unbenetzter Bereiche zur Vermeidung von Störsignalen auszusondern.

Aufgabe der Erfindung ist es, einen kostengünstigen Weg aufzuzeigen wie eine photometrische Konzentrationsbestimmung mit kleinen Probenmengen, die ein Testfeld nur partiell benetzen, durchgeführt werden kann.

Diese Aufgabe wird erfindungsgemäß durch ein Verfahren mit den im Anspruch 1 angegebenen Merkmalen sowie durch ein Messsystem gemäß Anspruch 8 gelöst. Vorteilhafte Weiterbildungen der Erfindung sind Gegenstand von Unteransprüchen.

Bei einem erfindungsgemäßen Verfahren zum Steuern einer photometrischen Messeinheit eines Messgeräts wird ein mit einer Körperflüssigkeitsprobe partiell benetztes Testfeld beleuchtet und einem Detektor der Messeinheit Licht von einer Messfläche, die einen Teil des Testfeldes bedeckt, zugeführt.

Bei einer Konzentrationsmessung an sehr kleinen Probenmengen genügen diese nicht für eine vollständige Benetzung eines Testfeldes. Typischerweise werden Testfelder von kleinen Probenmengen nur partiell benetzt. Dies bedeutet, dass nur eine Teilfläche eines Testfeldes mit Probenflüssigkeit in Wechselwirkung tritt und der Rest des Testfeldes unbenetzt bleibt. Licht von unbenetzten Bereichen des Testfeldes führt bei einer photometrischen Messung zu Störsignalen. Dem Detektor einer Messeinheit wird deshalb Licht von einer Messfläche zugeführt, die nur einen Teil des Testfeldes bedeckt. Erfindungsgemäß ist deshalb die Sensitivität des Detektors auf einen Teilbereich eines der Messeinheit zugeführten Testfeldes beschränkt.

Um die Farbänderung einer mit Körperflüssigkeit benetzten Teilfläche des Testfelds messen zu können, muss die Messfläche mit der benetzten Teilfläche überlappen. Erfindungsgemäß wird deshalb das Testfeld durch Verschieben der Messfläche nach der Körperflüssigkeitsprobe abgesucht. Während des Verschiebens wird die Intensität eines Detektorsignals auf das Auftreten eines Extremums überwacht. Wenn ein Extremum festgestellt wird, bedeutet dies, dass die Messfläche die benetzte Teilfläche des Testfelds überstrichen hat.

Eine Überlappung der Messfläche mit der benetzten Teilfläche des Testfeldes führt nämlich zu einer deutlichen Änderung des Detektorsignals, die umso größer ist, je größer die Überlappung ist. Wenn das Detektorsignal ein Extremum zeigt, ist deshalb eine vorteilhafte Einstellung mit maximaler Überlappung erreicht. Um ein Extremum als solches identifizieren zu können, muss die Messfläche über die maximale Überlappungsposition hinaus bewegt werden, so dass das Detektorsignal beispielsweise ausgehend von einem Minimum wieder ansteigt. Erfindungsgemäß wird deshalb die Messfläche zu der benetzten Teilfläche hin und über die Teilfläche hinaus verschoben. Bevorzugt wird die Messfläche vollständig über die benetzte Teilfläche hinaus verschoben, so dass die Messfläche mit der benetzten Teilfläche nicht mehr überlappt. Es genügt jedoch, die Messfläche teilweise über die benetzte Teilfläche hinaus zu verschieben, da bereits eine Reduktion der Überlappung zwischen Messbereich und benetzter Teilfläche ausreicht, um das Detektorsignal ausreichend zu ändern, so dass ein zuvor erreichtes Extremum als solches identifiziert werden kann.

Die Messfläche kann deshalb mit dem erfindungsgemäßen Verfahren auf der von der Flüssigkeitsprobe benetzten Teilfläche des Testfeldes positioniert werden, indem die optische Messeinheit wieder in die zu dem extremalen Detektorsignal führende Einstellung gebracht wird.

Anstatt das gesamte Testfeld mit einem Detektorarray in einer sehr großen Anzahl von Pixeln zu erfassen und durch eine Bildauswertung Pixel unbenetzter Bereiche zur Vermeidung von Störsignalen auszusondern, kann mit einem erfindungsgemäßen Verfahren bei wesentlichen geringerem Hardwareaufwand eine vergleichbar präzise Messung durchgeführt werden.

Je nach Detektor und Messprinzip kann eine Überlappung von Messfläche und benetzter Teilfläche des Testfeldes zu einem reduzierten oder einem erhöhten Detektorsignal führen. Wird beispielsweise Fluoreszenzlicht ausgewertet, erhöht sich typischer Weise das Detektorsignal bei einer Überlappung von Messfläche und benetzter Teilfläche des Testfeldes. Bei einer Remissionsmessung wird dagegen typischerweise eine geringere Lichtintensität gemessen, sobald die Messfläche mit der benetzter Teilfläche des Testfeldes überlappt, da dies zu einer erhöhten Absorption führt. Das erfindungsgemäß genutzte Extremum kann deshalb ein Maximum oder ein Minimum sein.

Für eine photometrische Konzentrationsbestimmung kann die Messfläche auf dem Testfeld periodisch hin- und herbewegt werden, so dass die Messfläche den benetzten Teilbereich periodisch überstreicht und ein periodisches Detektorsignal entsteht. Die photometrische Konzentrationsbestimmung kann dann durch Auswertung der extremalen Signalintensitäten erfolgen. Eines der Extrema, beispielsweise das Minimum, entsteht bei maximaler Überlappung von Messfläche und benetzter Teilfläche des Testfeldes. Das andere Extremum entsteht, wenn die Messfläche vollständig einen unbenetzten Teilbereich des Testfeldes bedeckt. Die Differenz zwischen Maximum und Minimum des sich periodisch ändernden Detektorsignals gibt deshalb an, wie stark sich die Remissions- bzw. Transmissionseigenschaften des Testfeldes durch die Benetzung mit der Körperflüssigkeitsprobe geändert haben. Indem das Testfeld mit Licht beleuchtet wird, dessen Absorption durch das Testfeld von der durch die Nachweisreaktion bewirkten Farbänderung beeinflusst wird, kann aus der Differenz der Extrema des sich periodisch ändernden Detektorsignals die Konzentration der Körperflüssigkeitsprobe photometrisch ermittelt werden.

Für die Auswertung eines sich periodisch ändernden Detektorsignals kann ein Lock-in Verstärker vorteilhaft verwendet werden. Ein solcher Lock-in Verstärker kann elektronisch realisiert werden. Bei hinreichend hoher Frequenz kann auch die Kinetik der Farbänderung des benetzten Testfeldbereichs erfasst werden. Dafür sollte die Frequenz der Lock-in Verstärkung deutlich schneller als die Zeitauflösung, mit der man die Kinetik beobachten möchte, gewählt werden, beispielsweise bei mindestens 100 Hz, insbesondere mindestens 500 Hz, bevorzugt mindestens 1 kHz. Geeignet ist insbesondere der Frequenzbereich von 1 kHz bis 10 kHz.

Sobald einige Extrema des sich periodisch ändernden Detektorsignals erfasst sind, kann das Signal-Rausch Verhältnis der photometrischen Messung verbessert werden, indem dem Detektor Licht nur noch bei den zu extremalem Detektorsignal führenden Einstellungen der Messeinheit zugeführt wird. Dies lässt sich beispielsweise dadurch erreichen, dass eine Lichtquelle der Messeinheit entsprechend schnell an- und ausgeschaltet wird.

Anstatt das Testfeld stets mit demselben Licht zu beleuchten und für die photometrische Konzentrationsbestimmung die Differenz zwischen maximalen und minimalen Detektorsignal, das bei die benetzte Teilfläche bedeckender Messfläche beziehungsweise eine unbenetzte Teilfläche bedeckender Messfläche entsteht, auszuwerten, kann die photometrische Konzentrationsbestimmung auch durchgeführt werden, indem das Testfeld zum Ermitteln des Extremums des Detektorsignals mit Licht einer anderen Spektralverteilung als für die photometrische Messung zur Konzentrationsbestimmung beleuchtet wird.

Sobald durch Auswertung des Verlaufs des Detektorsignals anhand des Extremums ermittelt wurde, wann die Messfläche die benetzte Teilfläche des Testfeldes bedeckt, kann das Testfeld für die photometrische Konzentrationsbestimmung mit Licht einer anderen Spektralverteilung beleuchtet werden. Während zunächst zum Auffinden des Extremums Licht mit einer Spektralverteilung besonders vorteilhaft ist, dessen Wechselwirkung mit dem Testfeld durch die Nachweisreaktion praktisch nicht beeinflusst wird, ist für die photometrische Konzentrationsbestimmung Licht mit einer Spektralverteilung am besten geeignet, das auf die durch die Nachweisreaktion hervorgerufene Farbänderung abgestimmt ist.

Im Prinzip kann für die photometrische Messung ein anderer Detektor verwendet werden als zur Positionierung der Messfläche. Bevorzugt wird bei einem erfindungsgemäßen System zum Einstellen derselbe Detektor verwendet wie für die photometrische Messung zur Konzentrationsbestimmung. Es ist aber auch möglich, zwei Detektoren zu verwenden, deren Sensitivität auf einen Teilbereich eines der Messeinheit zugeführten Testfeldes beschränkt ist, und mittels wenigstens eines Aktuators den Testfeldteilbereich, von welchem Licht zu den Detektoren geführt wird, einzustellen, wobei der Aktuator von einer Steuereinheit gesteuert wird, welche ein Detektorsignal eines Detektors auswertet und für eine photometrische Konzentrationsbestimmung eine Aktuatoreinstellung verwendet, bei welcher das Detektorsignal des anderen Detektors extremal ist

Indem das Testfeld abwechselnd mit Licht unterschiedlicher Spektralverteilung beleuchtet wird, lässt sich beim periodischen Bewegen der Messfläche erreichen, dass während des Überlappens von Messfläche und benetzter Teilfläche des Testfeldes jeweils abwechselnd unterschiedliches Licht zur Beleuchtung des Testfeldes verwendet wird. Ein Detektorsignal, das durch Licht mit der zum Einstellen der Messeinheit verwendeten Spektralverteilung hervorgerufen wurde, kann so zur Korrektur eines Messsignals, das durch Licht mit der für die photometrische Messung verwendeten Spektralverteilung hervorgerufen wurde, verwendet werden.

Am einfachsten lässt sich diese Variante des Verfahrens dadurch realisieren, dass eine Messeinheit mit zwei unterschiedlichen Lichtquellen, beispielsweise LEDs, verwendet wird, die abwechselnd mit der Frequenz der hin und her Bewegung ein- und ausgeschaltet werden. Möglich ist aber auch, nur eine Lichtquelle zu verwenden, der unterschiedliche Farbfilter zugeschaltet werden.

Ein pendelndes Hin- und Herbewegen der Messfläche ist insbesondere bei einem länglichen Benetzungsbereich eines Testfeldes, wie er sich beispielsweise durch Kapillarkanäle ergeben kann, geeignet. Ein relativ langer und schmaler Benetzungsbereich beispielsweise ein Benetzungsbereich dessen wenigsten des fünffachen seiner Breite beträgt, lässt sich durch eine Bewegung der Messfläche quer zur Längsrichtung des benetzten Bereichs zuverlässig finden. Eine Abtastung des Testfeldes in mehreren Zeilen ist ebenfalls möglich, bei einer hinreichend langen Benutzungsfläche aber in der Regel entbehrlich.

Bei einer alternativen Ausgestaltung des erfindungsgemäßen Verfahrens wird die Messfläche auf einer von der Flüssigkeitsprobe benetzten Teilfläche des Testfeldes positioniert, indem die Messfläche in eine Position verschoben wird, die zu dem extremalen Detektorsignal führt und anschließend in dieser Einstellung eine photometrische Messung zur Konzentrationsbestimmung durchgeführt. Die Messfläche kann auf diese Weise durch eine Einstellbewegung auf dem benetzten Teilbereich eines Testfeldes positioniert werden, die Einstellbewegung gestoppt und anschließend die photometrische Messung durchgeführt werden.

Insbesondere bei einem länglichen Benetzungsbereich eines Testfeldes, wie er sich beispielsweise durch Kapillarkanäle ergeben kann, kann für eine günstige Einstellung der Messeinheit eine Bewegung der Messfläche in einer einzigen Raumrichtung ausreichend sein. Das auf diese Weise gefundene Extremum des Detektorsignals ist dann unter Umständen lediglich ein lokales Maximum oder Minimum. Bevorzugt wird die Messeinheit durch eine Bewegung der Messfläche in zwei Raumrichtungen relativ zu dem Testfeld eingestellt, beispielsweise indem zunächst durch Bewegen in einer ersten Raumrichtung ein extremales Detektorsignal eingestellt wird und anschließend das Testfeld in einer zweiten Raumrichtung verschoben wird. Die Einstellbewegung in der zweiten Raumrichtung kann für eine photometrische Messung zur Konzentrationsbestimmung ebenso wie die Einstellbewegung in der zweiten Raumrichtung abgeschlossen und somit gestoppt sein. Es ist aber auch möglich, für die photometrische Konzentrationsbestimmung die Messfläche in der zweiten Raumrichtung hin- und her zu verschieben und die Konzentrationsbestimmung durch Auswertung des sich dabei ergebenden Detektorsignals zu ermitteln.

Wenn die Messfläche dabei über den benetzten Teilbereich des Testfeldes hinaus bewegt wird, ergibt sich ein Detektorsignal mit periodisch aufeinander folgenden Extrema, das in der vorstehend beschriebenen Weise zur Konzentrationsbestimmung ausgewertet werden kann. Es kann aber vorteilhaft sein, die Messfläche weniger weit hin- und her zu bewegen, um diese lediglich auf dem benetzten Teilbereich zu verschieben. Bei einer gleichmäßigen Benetzung erhält man dann ein konstantes Detektorsignal, da die Messfläche stets vollständig auf dem benetzten Teilbereich liegt. Schwankungen des Detektorsignals deuten dagegen auf eine ungleichmäßige Benetzung hin, die beispielsweise auf Luftblasen beruhen kann. Bei einem ungleichmäßigen Detektorsignal kann einem Benutzer dann signalisiert werden, dass eine Konzentrationsbestimmung wegen ungleichmäßiger Benetzung nicht möglich ist. Ein konstantes Detektorsignal kann dagegen für eine photometrische Konzentrationsbestimmung verwendet werden.

Das Verschieben der Messfläche kann bei einem erfindungsgemäßen Verfahren durch eine Bewegung des Testfeldes oder durch eine Bewegung eines oder mehrerer Bauteile der Messeinheit erreicht werden. Diese beiden Möglichkeiten zum Bewegen der Messfläche relativ zu dem Testfeld können auch kombiniert werden, beispielsweise indem für eine Verschiebung der Messfläche in einer ersten Raumrichtung das Testfeld und für eine Verschiebung der Messfläche in einer zweiten Raumrichtung, die zu der ersten Raumrichtung senkrecht sein kann aber nicht muss, ein oder mehrere Bauteile der Messeinheit bewegt werden.

Eine Bewegung eines Bauteils der Messeinheit relativ zum Testfeld kann zur Verschiebung der Messfläche insbesondere dadurch erreicht werden, dass ein Träger der Messeinheit, der eine oder mehrere Lichtquellen und den oder die Detektoren trägt, bewegt wird. Auf diese Weise lassen sich unerwünschte Änderungen von Abbildungseigenschaften oder Beleuchtungsintensitäten vorteilhaft einfach vermeiden.

Eine Einrichtung zum Bewegen eines Testfeldes ist bei einem Mess- und Stechgerät in der Regel ohnehin vorhanden, so dass eine Positionierbewegung des Testfeldes kaum einen zusätzlichen Aufwand verursacht. Beispielsweise können Testfelder auf einem Trägerband abgeordnet, das zum Positionieren ähnlich wie eine Tonbandkassette vor- und gegebenenfalls auch zurückgespult werden kann.

Das erfindungsgemäße Verfahren ist sowohl für Transmissionsmessungen als auch für Remissionsmessungen geeignet.

Eine vorteilhafte Weiterbildung der Erfindung sieht vor, dass das Testfeld zum Einstellen der Messeinheit mit Licht einer anderen Spektralverteilung als für die photometrische Messung zur Konzentrationsbestimmung beleuchtet wird. Für eine photometrische Messung zur Konzentrationsbestimmung wird üblicherweise Licht verwendet, dessen Intensität überwiegend in einem Spektralbereich liegt, in welchem sich die durch eine Nachweisreaktion hervorgerufene Farbänderung vollzieht. Wenn beispielsweise eine Nachweisreaktion verwendet wird, die zu einer erhöhten Absorption im blauen Farbspektrum oder nahen UV-Bereich führt, ist für die photometrische Messung blaues bzw. UV-Licht am besten geeignet. Zum Ermitteln der Einstellung der Messeinheit, bei welcher das Detektorsignal extremal ist, kann in einem solchen Fall beispielsweise grünes Licht verwendet werden, dessen Absorption und Remission von der Nachweisreaktion praktisch nicht beeinflusst wird.

Indem zum Einstellen der Messeinheit Licht verwendet wird, dessen Wechselwirkung mit dem Testfeld, z.B. Absorption bzw. Remission, von der Nachweisreaktion unabhängig ist, kann mit der Einstellung der Messeinheit unmittelbar nach Benetzung des Testfeldes begonnen werden und dieses auch bei ablaufender Nachweisreaktion durchgeführt werden.

Bei einem erfindungsgemäßen Verfahren kann dem Detektor Licht von einer Messfläche, die einen Teil des Testfeldes bedeckt, zugeführt werden, indem Licht auf die Messfläche fokussiert wird. Eine weitere Möglichkeit besteht darin, dass der Detektor auf die Messfläche fokussiert wird.

Bei der erstgenannten Alternative wird beim Beleuchten des Testfeldes nur die Messfläche beleuchtet, während der übrige Teil des Testfeldes dunkel bleibt. Bei der zweiten Alternative wird das Testfeld vollständig beleuchtet. Damit der Detektor nur für die Messfläche sensitiv ist, muss deshalb durch geeignete optische Elemente dafür gesorgt werden, dass Licht von Testfeldbereichen außerhalb der Messfläche nicht zu dem Detektor gelangt. Diese beiden Varianten sind an sich gleichwertig, da stets erreicht werden kann, dass Licht nur von der Messfläche zu dem Detektor gelangt, und unterscheiden sich im Wesentlichen nur in der Anordnung optischer Bauelemente, beispielsweise Linsen oder ähnlichem. Bei der ersteren Variante erfolgt eine Abbildung zwischen Lichtquelle und Testfeld, bei der zweiten Variante zwischen Testfeld und Detektor. Wenn bei der Beschreibung der vorliegenden Erfindung davon die Rede ist, dass das Testfeld beleuchtet wird, so umfasst die sowohl den Fall, dass nur ein Teil des Testfeldes, nämlich die Messfläche beleuchtet wird, als auch den Fall, dass das Testfeld vollflächig beleuchtet wird.

Detektorsignale enthalten praktisch stets einen Rauschanteil. Um zu verhindern, dass ein erfindungsgemäßes Verfahren durch einen Rauschanteil des Detektorsignals zu falschen Ergebnissen führt, kann ein Schwellenwert für einen Signalhub vorgegeben werden, so dass ein Extremum bei einem erfindungsgemäßen Verfahren nur dann als ein Extremum behandelt wird, wenn der dabei beobachtete Signalhub den Schwellwert überschreitet.

Weitere Einzelheiten und Vorteile der Erfindung werden an einem Ausführungsbeispiel unter Bezugnahme auf die beigefügten Zeichnungen erläutert. Es zeigen:
- Figur 1: eine schematische Darstellung eines Testfeldes mit einer benetzten Teilfläche und einer Messfläche;
- Figur 2: eine schematische Darstellung des Detektorsignals bei einer Verschiebung der Messfläche;
- Figur 3: das in Figur 1 dargestellte Testfeld mit auf der benetzten Teilfläche positionierter Messfläche;
- Figur 4: den Verlauf des Detektorsignals bei einer Verschiebung der Messfläche bei einer Verschiebung in der in Figur 3 dargestellten Pfeilrichtung;
- Figur 5: eine schematische Darstellung eines Testfeldes mit Benetzungsfehler;
- Figur 6: den Signalverlauf bei einer Verschiebung der in Figur 5 dargestellten Messfläche in Pfeilrichtung.

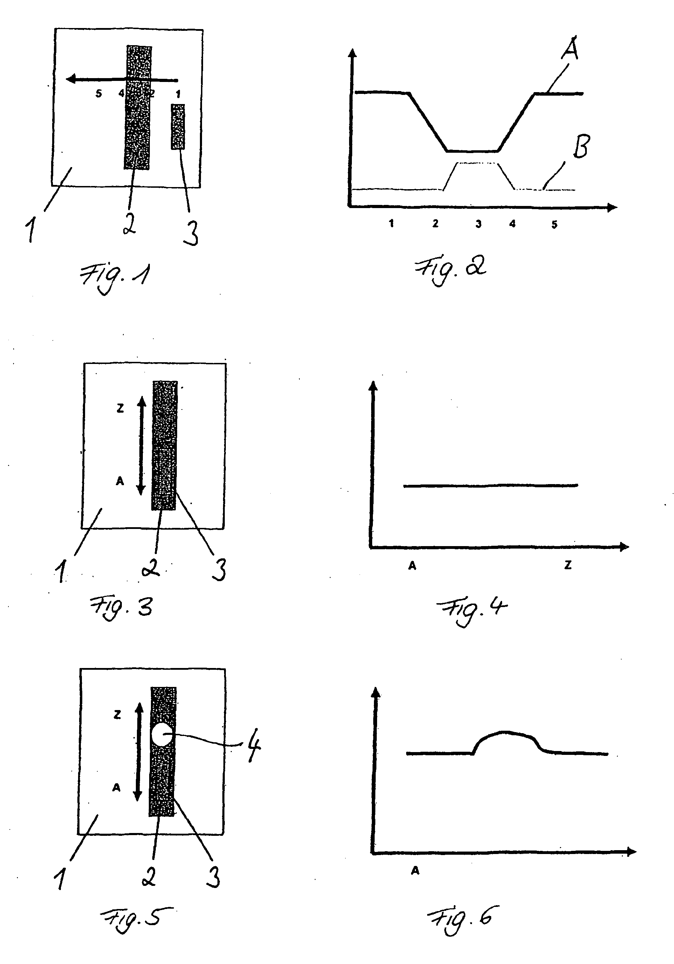

In Figur 1 ist schematisch ein Testfeld 1 dargestellt, das in einer Teilfläche 2 mit einer Körperflüssigkeitsprobe benetzt ist. Das Testfeld 1 trägt Nachweisreagenzien, die bei Kontakt mit einer Flüssigkeitsprobe zu einer Nachweisreaktion führen, welche eine Farbänderung der benetzten Teilfläche 2 bewirkt. Die Stärke der Farbänderung hängt von einer gesuchten Analytkonzentration, beispielsweise der Glucosekonzentration ab. Durch eine photometrische Messung kann deshalb die gesuchte Analytkonzentration bestimmt werden.

Ein solches Testfeld 1 bildet zusammen mit einem Stechelement sowie einem Mess- und Stechgerät ein Messsystem zur photometrischen Bestimmung einer Analytkonzentration in einer Körperflüssigkeitsprobe. Das Testfeld 1 kann auf einem Stechelement angeordnet sein, das einen Kanal aufweist, mit dem eine Probe durch Kapillarkräfte zu dem Testfeld transportiert werden können. Möglich ist es auch, separate Stechelemente und Testfelder zu verwenden. Eine Körperflüssigkeitsprobe kann einem Testfeld 1 beispielsweise zugeführt werden, indem es an einen als Rinne ausgeführten Kanal eines Stechelements angelegt wird.

Das Mess- und Stechgerät eines solchen Messsystems enthält eine Messeinheit zur photometrischen Messung einer Farbänderung eines Testfeldes 1. Die nicht dargestellte Messeinheit weist eine Lichtquelle sowie einen Detektor auf und gibt einen Strahlengang für Licht von der Lichtquelle zu dem Detektor vor, so dass die Sensitivität des Detektors auf die Messfläche 3, also auf einen Teilbereich eines der Messeinheit zugeführten Testfeldes 1 beschränkt ist. Der Strahlengang kann beispielsweise durch eine Linse zwischen der Lichtquelle und dem Testfeld 1 oder eine Linse zwischen dem Detektor und dem Testfeld 1 vorgegeben sein.

Bei einem erfindungsgemäßen Verfahren wird das Testfeld 1 also beleuchtet und einem Detektor einer Messeinheit Licht von einer Messfläche 3, die einen Teil des Testfeldes 1 bedeckt, zugeführt. Für eine photometrische Konzentrationsbestimmung wird das Testfeld 1 auf einer Teilfläche 2 mit Körperflüssigkeit benetzt, die größer als die Messfläche 3 ist. Bei dem dargestellten Ausführungsbeispiel hat die Teilfläche 2 eine Größe von etwa 200 µm mal 1000 µm, während die Messfläche nur 100 µm mal 300 µm groß ist.

Für eine photometrische Messung zur Konzentrationsbestimmung muss die Messfläche 3 die von der Flüssigkeit benetzte Teilfläche 2 des Testfeldes 1 bedecken. Das Testfeld 1 wird deshalb durch Verschieben der Messfläche 3 nach der Körperflüssigkeitsprobe abgesucht.

Indem die Messfläche 3 in Richtung des in Figur 1 dargestellten Pfeils verschoben wird, wird die benetzte Teilfläche 2 von der Messfläche überstrichen und es ergibt sich der in Figur 2 schematisch dargestellte Verlauf eines Detektorsignals. Dabei sind in Figur 1 verschiedene Positionen, die sich bei einer Verschiebung der Messfläche 3 in Pfeilrichtung ergeben, durch Zahlen 1 bis 5 angedeutet. Entsprechend ist in Figur 2 als Kurve A die Intensität des Detektorsignals für die entsprechenden Positionen angedeutet.

Wird, wie bei dem dargestellten Ausführungsbeispiel, in Remission gemessen, ergibt sich eine signifikante Reduktion der Signalintensität, sobald die Messfläche 3 die mit der Körperflüssigkeitsprobe benetzte Teilfläche 2 des Testfeldes 1 bedeckt. Die mit Körperflüssigkeit benetzte Teilfläche 2 absorbiert Licht nämlich deutlich stärker als unbenetzte Bereiche des Testfeldes 1. Das Minimum des in Figur 2 dargestellten Signalverlaufs A tritt deshalb auf, wenn die Messfläche 3 die benetzte Teilfläche 2 vollständig bedeckt.

Anstatt einer Remissionsmessung kann eine Konzentrationsbestimmung auch mit Fluoreszenzlicht durchgeführt werden. In Figur 2 ist schematisch als Kurve B der Signalverlauf für eine Fluoreszenzmessung dargestellt. In diesem Fall erhöht sich die Signalintensität, sobald die Messfläche 3 die mit der Körperflüssigkeitsprobe benetzte Teilfläche 2 des Testfeldes 1 bedeckt, da nur benetzte Bereiche Fluoreszenzlicht ausstrahlen.

Die Messfläche 3 kann also auf der von der Flüssigkeitsprobe benetzten Teilfläche 2 des Testfeldes 1 positioniert werden, indem eine optische Messeinheit in die zu dem extremalen Detektorsignal führende Einstellung gebracht wird. Bei dem beschriebenen Verfahren wird also während des Verschiebens der Messfläche 3 die Intensität des Detektorsignals erfasst und anschließend aus dem Verlauf des Detektorsignals ein Extremum ermittelt. Danach wird die Messfläche 3 wieder in die Position verschoben, in der zuvor das extremale, beispielsweise minimale, Detektorsignal beobachtet wurde.

Aus dem Verlauf des Detektorsignals, das beim Verschieben der Messfläche 3 gemessen wird, lässt sich die Breite der von der Flüssigkeitsprobe benetzten Teilfläche 2 des Testfeldes 1 ermitteln. Diese Breite kann mit einem Sollwert verglichen werden, um eine für eine Konzentrationsbestimmung ungeeignete Benetzung zu erkennen. Eine Abweichung um mehr als einen vorgegebenen Schwellenwert kann einem Benutzer des Stech- und Messgeräts signalisiert werden.

Um die Messfläche 3 relativ zu dem Testfeld 1 zu verschieben, kann das Testfeld 1 bewegt werden. Möglich ist es aber auch, die Messfläche 3 durch Bewegen eines Bauteils der Messeinheit zu verschieben. Beispielsweise kann ein Träger der Messeinheit, der den Detektor und die Lichtquelle trägt verschoben werden. Geeignete Aktuatoren zum Bewegen eines Bauteils der Messeinheit sind beispielsweise für Schreib-/Leseköpfe von CD Laufwerken oder für Digitalkameras mit shake-reduction bekannt. Der Aktuator wird von einer Steuereinheit eines Mess- und Stechgeräts gesteuert, die dafür ein Detektorsignal auswertet und für eine photometrische Konzentrationsbestimmung eine Aktuatoreinstellung verwendet, bei welcher das Detektorsignal extremal ist.

Bevorzugt bleibt der Abstand zwischen Detektor und Testfeld sowie zwischen Lichtquelle und Testfeld beim Verschieben der Messfläche unverändert. Einstellbewegungen finden also bevorzugt nur in einer oder zwei Raumrichtungen statt. Eine Einstellbewegung in drei Raumrichtungen ist zwar ebenfalls möglich, in der Regel jedoch nicht erforderlich und würde zudem die Zeit für eine Konzentrationsbestimmung erhöhen.

Indem die optische Messeinheit in die zu dem extremalen Detektorsignal führende Einstellung gebracht wird, ergibt sich die in Figur 3 dargestellte Situation, dass die Messfläche 3 innerhalb der mit Probenflüssigkeit benetzten Teilfläche 2 des Testfeldes 1 angeordnet ist. Durch eine weitere Verschiebung der Messfläche 3 in Richtung des in Figur 3 dargestellten Pfeils kann überprüft werden, ob das Testfeld 1 in der Messfläche 3 tatsächlich vollständig und gleichmäßig mit Körperflüssigkeit benetzt ist. Bei einer homogenen Benetzungen der Teilfläche 2 wie es in Figur 3 dargestellt ist, ergibt sich bei einer Verschiebung der Messfläche 3 in der dargestellten Pfeilrichtung zwischen den Positionen A und Z ein konstanter Verlauf des Detektorsignals, wie er in Figur 4 schematisch dargestellt ist.

Durch Luftblasen oder ähnliches kann es zu einer Unterdosierung mit Probenflüssigkeit und damit zu einer inhomogenen Benetzung kommen. Ein solcher Fall ist schematisch in Figur 5 dargestellt. Dort ist durch eine Luftblase 4 die Teilfläche 3 nur unvollständig mit Körperflüssigkeit benetzt. Bei einer Verschiebung der Messfläche 3 in Richtung des dargestellten Doppelpfeils ergibt sich deshalb der schematisch in Figur 6 gezeigte Signalverlauf. Wenn die Messfläche 3 einen wegen der Luftblase 4 unzureichend benetzten Teilbereich bedeckt, wird weniger Licht absorbiert, so dass die Remission etwas zunimmt. Durch eine Verschiebung der Messfläche 3 quer zu einer vorhergehenden Verschiebung in einer ersten Raumrichtung kann somit überprüft werden, ob der von der Messfläche 3 in einer gewählten Messposition bedeckte Bereich eines Testfeldes 1 vollständig mit Probenflüssigkeit benetzt ist.

Bei einem solchen Verfahren wird die Messfläche 3 zur Ermittlung eines Extremums eines Detektorsignals, beispielsweise eines Minimums, zunächst in einer ersten Richtung verschoben, nach dem Positionieren der Messfläche 3 in der benetzten Teilfläche 2 die Messfläche quer, insbesondere senkrecht, zu der ersten Richtung verschoben, und aus dem Verlauf der dabei ermittelten Intensität des Detektorsignals ermittelt, ob die benetzte Teilfläche 2 ausreichend groß ist, um die Messfläche 3 vollständig aufzunehmen. Falls dies der Fall ist, wird die Messfläche 3 vollständig in dem benetzten Teilbereich 2 positioniert und eine photometrische Konzentrationsbestimmung durchgeführt, andernfalls wird einem Benutzer des Stech- und Messgeräts signalisiert, dass eine Konzentrationsbestimmung mit der gewonnen Körperflüssigkeitsprobe nicht durchgeführt werden kann.

Dabei kann eine Verschiebung der Messfläche 3 in der ersten Richtung durch eine Bewegung des Testfeldes 1 und eine Verschiebung der Messfläche 3 in der zweiten Richtung durch eine Bewegung eines Bauteils der Messeinheit, insbesondere eine Trägers der Messeinheit, erreicht werden.

Zum Ermitteln der Einstellung der Messeinheit, bei welcher das Detektorsignal extremal ist, kann Licht mit derselben Spektralverteilung wie für die photometrische Konzentrationsbestimmung verwendet werden. Eine zuverlässigere und schnellere Einstellung der Messeinheit lässt sich jedoch erreichen, indem man das Testfeld 1 zum Ermitteln der Einstellung der Messeinheit, bei welcher das Detektorsignal extremal ist, mit Licht einer anderen Spektralverteilung als für die photometrische Messung zur Konzentrationsbestimmung beleuchtet. Bevorzugt wird zum Einstellen der Messeinheit Licht verwendet, dessen Absorption durch das Testfeld 1 von der Nachweisreaktion und der dadurch bewirkten Verfärbung praktisch unbeeinflusst ist. Dies hat den Vorteil, dass eine Einstellung der Messeinheit und damit eine Positionierung der Messfläche 3 innerhalb der benetzten Teilfläche 2 problemlos bereits durchgeführt werden kann, während die Nachweisreaktion abläuft oder sogar bevor diese begonnen hat.

Licht mit unterschiedlicher Spektralverteilung kann beispielsweise erzeugt werden, indem entsprechende Farbfilter in den Strahlengang eingebracht werden. Besser ist es jedoch, zwei unterschiedliche Lichtquellen zu verwenden, beispielsweise 2 LEDs, die Licht unterschiedlicher Farbe emittieren.

Besonders vorteilhaft ist es, ein Detektorsignal, das durch Licht mit der zum Einstellen der Messeinheit verwendeten Spektralverteilung hervorgerufen wurde, zur Korrektur eines Messsignals, das durch Licht mit der für die photometrische Messung verwendeten Spektralverteilung hervorgerufen wurde, zu verwenden. Von der Nachweisreaktion unbeeinflusstes Licht kann nämlich als Referenz verwendet werden. Am einfachsten lässt sich dies realisieren, indem die beiden Lichtquellen abwechselnd ein- und ausgeschaltet werden, so dass dem Detektor nach erfolgter Einstellung der Messeinheit abwechselnd Licht mit unterschiedlichen Spektralverteilungen zugeführt wird.

Eine alternative Möglichkeit zur Korrektur einer photometrischen Messung an der benetzten Teilfläche 2 des Testfeldes 1 besteht darin, als Referenz eine mit Licht derselben Spektralverteilung vorgenommene Messung an einem unbenetzten Bereich des Testfeldes 1 zu verwenden. Die Differenz der beiden auf diese Weise gewonnenen Signale gibt dann mit erhöhter Genauigkeit die Stärke der konzentrationsabhängigen Verfärbung des benetzten Teilbereichs 2 des Testfeldes 1 wieder.

Die beiden entsprechenden Messungen können nacheinander durchgeführt werden. Möglich ist es aber auch, einen ersten Detektor für die photometrische Messung und einen weiteren Detektor für eine Referenzmessung an einem unbenetzten Teilbereich des Testfeldes 1 zu verwenden. Bei einem entsprechenden Messsystem hat die Messeinheit also zusätzlich zu dem Detektor, dessen Detektorsignal für ihre Einstellung und eine anschließende photometrische Konzentrationsbestimmung an einer Körperflüssigkeitsprobe verwendet wird, mindestens einen weiteren Detektor. Beispielsweise kann eine Messeinheit drei Detektoren aufweisen, wobei der mittlere Detektor für die photometrische Messung und die beiden übrigen Detektoren jeweils für Referenzmessungen an unbenetzten Teilbereichen des Testfeldes 1 verwendet werden.

### Bezugszahlen

- 1: Testfeld
- 2: Teilfläche
- 3: Messfläche
- 4: Luftblase

## Patentansprüche

1. Verfahren zum Steuern einer photometrischen Messeinheit eines Messgeräts zur Untersuchung einer durch einen Stich gewonnenen menschlichen oder tierischen Körperflüssigkeitsprobe, wobei
ein mit einer Körperflüssigkeitsprobe partiell benetztes Testfeld (1) beleuchtet und einem Detektor der Messeinheit Licht von einer Messfläche (3), die einen Teil des Testfeldes (1) bedeckt, zugeführt wird,
die Messfläche (3) relativ zu dem Testfeld (1) zu einer von der Köperflüssigkeitsprobe benetzten Teilfläche (2) hin und über die Teilfläche (2) hinaus verschoben wird,
während des Verschiebens die Intensität eines Detektorsignals erfasst wird,
in dem Verlauf der Intensität des Detektorsignals ein Extremum ermittelt wird,
**dadurch gekennzeichnet, dass**
die Messfläche (3) wieder in die Position gebracht wird, in der zuvor ein extremales Detektorsignal gemessen wurde,
die Messfläche (3) auf dem Testfeld (1) periodisch hin- und herbewegt wird, so dass die Messfläche (3) die benetzte Teilfläche (2) periodisch überstreicht und ein periodisches Detektorsignal entsteht,
die Position der Messfläche (3), bei welcher die Instensität des Detektorsignals extremal ist, für eine photometrische Konzentrationsbestimmung verwendet wird und die photometrische Konzentrationsbestimmung durch Auswertung der extremalen Signalintensitäten erfolgt.

2. Verfahren nach Anspruch 1, **dadurch gekennzeichnet, dass** die Messfläche (3) durch Bewegen eines Bauteils der Messeinheit verschoben wird.

3. Verfahren nach einem der vorstehenden Ansprüche, **dadurch gekennzeichnet, dass** die Messfläche (3) durch Bewegen eines Trägers der Messeinheit, der den Detektor und wenigstens eine Lichtquelle trägt, verschoben wird.

4. Verfahren nach einem der vorstehenden Ansprüche, **dadurch gekennzeichnet, dass** die Messfläche (3) durch Bewegen des Testfeldes (1) verschoben wird.

5. Verfahren nach einem der vorstehenden Ansprüche, **dadurch gekennzeichnet, dass** die Messfläche (3) in einer Richtung durch Bewegen des Testfeldes (1) und in einer weiteren Richtung durch Bewegen eines Bauteils der Messeinheit verschoben wird.

6. Verfahren nach einem der vorstehenden Ansprüche, **dadurch gekennzeichnet, dass** die Messeinheit eine Remissionsmessung durchführt.

7. Verfahren nach einem der vorstehenden Ansprüche, **dadurch gekennzeichnet, dass** durch Auswerten des beim Verschieben der Messfläche (3) gemessenen Verlaufs des Detektorsignals ermittelt wird, ob die Benetzung für eine Konzentrationsbestimmung ausreicht.

8. Messsystem zur photometrischen Bestimmung einer Analytkonzentration in einer Körperflüssigkeitsprobe, mit
Testfeldern (1) mit Nachweisreagenzien, die bei Kontakt mit Körperflüssigkeit eine photometrisch auswertbare Nachweisreaktion bewirken, und
einem Messgerät, um mit einem Testfeld (1) die Analytkonzentration in einer aus einer Stichwunde gewonnenen Körperflüssigkeitsprobe zu messen, wobei das Messgerät eine Messeinheit zur photometrischen Messung einer Farbänderung eines Testfeldes (1) enthält,
die Messeinheit eine Lichtquelle und einen Detektor aufweist, und
die Messeinheit einen Strahlengang für Licht von der Lichtquelle zu dem Detektor vorgibt,
**dadurch gekennzeichnet, dass**
der Strahlengang die Sensitivität des Detektors auf einen Teilbereich eines der Messeinheit zugeführten Testfeldes (1) beschränkt,
mittels wenigstens eines Aktuators der Testfeldteilbereich, von welchem der Strahlengang Licht zu dem Detektor führt, einstellbar ist,
der Aktuator von einer Steuereinheit so gesteuert wird, dass der Testfeldteilbereich, von welchem der Strahlengang Licht zu dem Detektor führt, periodisch hin- und herbewegt wird, so dass die Messfläche (3) die benetzte Teilfläche (2) periodisch überstreicht und ein periodisches Detektorsignal entsteht, das die Steuereinheit auswertet,
wobei die Steuereinheit für eine photometrische Konzentrationsbestimmung eine Aktuatoreinstellung verwendet, bei welcher die Intensität des Detektorsignals extremal ist, und die photometrische Konzentrationsbestimmung durch Auswertung der extremalen Signalintensitäten vornimmt.

9. Messsystem nach Anspruch 8, **gekennzeichnet durch** Stechelemente, die einen Kapillarkanal aufweisen, der die Benetzung einer länglichen Teilfläche (2) eines Testfeldes (1) bewirkt.

10. Messsystem nach Anspruch 8 oder 9, **dadurch gekennzeichnet, dass** die Messeinheit mehrere Lichtquellen aufweist, die von der Steuereinheit abwechselnd eingeschaltet werden.

11. Messsystem nach einem der Ansprüche 8 bis 10, **dadurch gekennzeichnet, dass** die Messeinheit zusätzlich zu dem Detektor, dessen Detektorsignal für ihre Einstellung und eine anschließende photometrische Konzentrationsbestimmung an einer Körperflüssigkeitsprobe verwendet wird, einen weiteren Detektor für eine Referenzmessung an einem unbenetzten Teilbereich des Testfeldes (1) aufweist.

## Claims

1. Method for controlling a photometric measuring unit of a measuring device for examining a human or animal bodily fluid sample obtained by way of lancing, wherein
a test field (1) partially wetted by a bodily fluid sample is illuminated and light from a measuring area (3) that covers a portion of the test field (1) is fed to a detector of the measuring unit,
the measuring area (3) is displaced relative to the test field (1) toward a partial surface (2) wetted by the bodily fluid sample and past the partial surface (2), during the displacement, the intensity of a detector signal is detected, an extreme value in the course of the intensity of detector signal is determined,
**characterized in that**
the measuring area (3) is brought again to the position in which an extreme detector signal was previously measured,
the measuring area (3) is moved back and forth periodically on the test field (1) such that the measuring area (3) periodically passes over the wetted partial surface (2) and a periodic detector signal is generated,
the position of the measuring area (3) in which the intensity of the detector signal is extreme is used for a photometric determination of concentration and the photometric determination of concentration is carried out by evaluating the extreme signal intensity.

2. Method according to claim 1, **characterized in that** the measuring area (3) is displaced by moving a component of the measuring unit.

3. Method according to any one of the preceding claims, **characterized in that** the measuring area (3) is displaced by moving a carrier of the measuring unit which carries the detector and at least one light source.

4. Method according to any one of the preceding claims, **characterized in that** the measuring area (3) is displaced by moving the test field (1).

5. Method according to any one of the preceding claims, **characterized in that** the measuring area (3) is displaced in one direction by moving the test field (1), and is displaced in another direction by moving a component of the measuring unit.

6. Method according to any one of the preceding claims, **characterized in that** the measuring unit performs a remission measurement.

7. Method according to any one of the preceding claims, **characterized in that** the course of the detector signal measured during displacement of the measuring area (3) is evaluated to determine whether the wetting is sufficient for a determination of concentration.

8. Measuring system for photometric determination of an analyte concentration in a bodily fluid sample, comprising
test fields (1) having detection reagents which, upon contact with bodily fluid, induce a detection reaction which can be evaluated photometrically, and
a measuring device for measuring, by way of a test field (1), the analyte concentration in a bodily fluid sample obtained from a lanced site, wherein
the measuring device contains a measuring unit for performing a photometric measurement of a color change of a test field (1),
the measuring unit has a light source and a detector, and
the measuring unit defines a beam path for light from the light source to the detector,
**characterized in that**
the beam path limits the sensitivity of the detector to a partial region of a test field (1) fed to the measuring unit,
the test field partial region from which the beam path directs light to the detector can be adjusted using at least one actuator,
the actuator is controlled by a control unit such that the test field partial region from which the beam path leads to the detector is moved periodically back and forth so that the measuring area (3) periodically passes over the wetted partial surface (2) and a periodic detector signal is generated that is evaluated by the control unit,
wherein the control unit uses an actuator setting at which a detector signal is extreme for a photometric determination of concentration and performs the photometric determination of concentration by evaluation of the extreme signal intensities.

9. Measuring system according to claim 8, **characterized in that** the lancing elements comprise a capillary channel that brings about the wetting of an elongated partial surface (2) of a test field (1).

10. Measuring system according to claim 8 or 9, **characterized in that** the measuring unit comprises a plurality of light sources which are switched on in alternation by the control unit.

11. Measuring system according to any one of the claims 8 to 10, **characterized in that** the measuring unit comprises, in addition to the detector, the detector signal of which is used for the adjustment of said measuring unit and for a subsequent photometric determination of concentration on a bodily fluid sample, a further detector for performing a reference measurement on an unwetted partial surface of the test field (1).

## Revendications

1. Procédé de commande d'une unité de mesure photométrique d'un appareil de mesure pour l'analyse d'un échantillon de fluide corporel humain ou animal prélevé par piqûre,
un champ de test (1) partiellement humecté d'un échantillon de fluide corporel étant éclairé et la lumière d'une surface de mesure (3) qui couvre une partie du champ de test (1) étant amenée à un détecteur de l'unité de mesure,
la surface de mesure (3) étant déplacée par rapport au champ de test (1), avançant en direction d'une surface partielle (2) humectée de l'échantillon de fluide corporel, passant sur la surface partielle (2) et la dépassant, l'intensité d'un signal de détecteur étant saisie pendant le déplacement, un extrême étant déterminé dans la courbe de l'intensité du signal de détecteur,
**caractérisé en ce que**
la surface de mesure (3) est ramenée dans la position dans laquelle un extrême du signal de détecteur a été mesuré auparavant,
la surface de mesure (3) effectue un mouvement de va-et-vient périodique sur le champ de test (1) de manière à ce que la surface de mesure (3) balaie périodiquement la surface partielle (2) humectée et qu'un signal de détecteur périodique soit généré,
la position de la surface de mesure (3) dans laquelle un extrême de l'intensité du signal de détecteur est obtenu est utilisée pour une détermination photométrique d'une concentration et la détermination photométrique d'une concentration s'effectue en analysant les extrêmes des intensités du signal.

2. Procédé selon la revendication 1, **caractérisé en ce que** la surface de mesure (3) est déplacée grâce au mouvement d'un élément structurel de l'unité de mesure.

3. Procédé selon l'une des revendications précédentes, **caractérisé en ce que** la surface de mesure (3) est déplacée grâce au mouvement d'un support de l'unité de mesure qui porte le détecteur et au moins une source lumineuse.

4. Procédé selon l'une des revendications précédentes, **caractérisé en ce que** la surface de mesure (3) est déplacée grâce au déplacement du champ de test (1).

5. Procédé selon l'une des revendications précédentes, **caractérisé en ce que** la surface de mesure (3) est déplacée dans une direction grâce au déplacement du champ de test (1) et dans une autre direction grâce au mouvement d'un élément structurel de l'unité de mesure.

6. Procédé selon l'une des revendications précédentes, **caractérisé en ce que** l'unité de mesure exécute une mesure du facteur de luminance.

7. Procédé selon l'une des revendications précédentes, **caractérisé en ce que** l'on détermine si l'humidification est suffisante pour une détermination d'une concentration en analysant la courbe du signal de détecteur mesuré lors du déplacement de la surface de mesure (3).

8. Système de mesure pour la détermination photométrique d'une concentration d'un analyte dans un échantillon de fluide corporel, comprenant
des champs de test (1) avec des réactifs de détection qui provoquent, lors du contact avec un fluide corporel, une réaction de détection pouvant faire l'objet d'une analyse photométrique et
un appareil de mesure pour mesurer, à l'aide d'un champ de test (1), la concentration d'un analyte dans un échantillon de fluide corporel prélevé à partir d'une plaie par piqûre,
l'appareil de mesure comprenant une unité de mesure pour la mesure photométrique d'un changement de couleur d'un champ de test (1),
l'unité de mesure comprenant une source lumineuse et un détecteur et l'unité de mesure définissant un trajet donné pour les rayons de lumière de la source lumineuse vers le détecteur,
**caractérisé en ce que**
le trajet des rayons limite la sensibilité du détecteur à une zone partielle d'un champ de test (1) amené à l'unité de mesure,
la zone partielle du champ de test depuis laquelle les rayons de lumière sont conduits au détecteur en suivant le trajet peut être réglée au moyen d'au moins un actionneur,
l'actionneur est commandé par une unité de commande de telle sorte que la zone partielle de champ de test depuis laquelle les rayons de lumière sont conduits au détecteur en suivant le trajet effectue un mouvement de va-et-vient périodique, de manière à ce que la surface de mesure (3) balaie périodiquement la surface partielle (2) humectée et qu'un signal de détecteur périodique qui est analysé par l'unité de commande soit généré, l'unité de commande utilisant, pour une détermination photométrique d'une concentration, un réglage de l'actionneur avec lequel un extrême de l'intensité du signal de détecteur est obtenu et procédant à la détermination photométrique d'une concentration en analysant les extrêmes des intensités du signal.

9. Système de mesure selon la revendication 8, **caractérisé par** des éléments de piqûre présentant un canal capillaire qui produit l'humidification d'une surface partielle (2) allongée d'un champ de test (1).

10. Système de mesure selon la revendication 8 ou 9, **caractérisé en ce que** l'unité de mesure comprend plusieurs sources lumineuses qui sont allumées en alternance par l'unité de commande.

11. Système de mesure selon l'une des revendications 8 à 10, **caractérisé en ce que** l'unité de mesure comprend, en plus du détecteur dont le signal de détecteur est utilisé pour son réglage et pour une détermination photométrique d'une concentration d'un échantillon de fluide corporel succédant à ce réglage, un autre détecteur pour effectuer une mesure de référence sur une zone partielle non humectée du champ de test (1).
